(19) Europäisches Patentamt
European Patent Office
Office européen des brevets

(11) **EP 3 785 940 B1**

(12) **EUROPEAN PATENT SPECIFICATION**

(45) Date of publication and mention
of the grant of the patent:
**19.01.2022 Bulletin 2022/03**

(21) Application number: **20190671.6**

(22) Date of filing: **12.08.2020**

(51) International Patent Classification (IPC):
***B60C 11/03*** (2006.01)     ***B60C 11/13*** (2006.01)
***B60C 11/00*** (2006.01)

(52) Cooperative Patent Classification (CPC):
**B60C 11/0304; B60C 11/0083; B60C 11/1376;**
**B60C 11/1392;** B60C 11/0309; B60C 2011/0341;
B60C 2011/0395

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2019 JP 2019157536**

(43) Date of publication of application:
**03.03.2021 Bulletin 2021/09**

(73) Proprietor: **Sumitomo Rubber Industries, Ltd.
Kobe-shi, Hyogo-ken 651-0072 (JP)**

(72) Inventors:
• **SAWAKAMI, Isao
Kobe-shi, Hyogo 651-0072 (JP)**
• **KUNKEL, Daniel
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 2 732 983      EP-B1- 2 732 983
JP-A- 2000 142 030     JP-A- 2011 225 084**

**Description**

BACKGROUND OF THE INVENTION

Field of the Invention

The present invention relates to a tire and specifically relates to a tire having a tread portion having a designated mounting direction to a vehicle.

Description of the Background Art

For example, JP 2015-140047 A discloses a tire having a tread portion having a designated mounting direction to a vehicle. For the tire, improvement of steering stability on a dry road surface and a wet road surface is expected by specifying the sum of the width of a shoulder main groove and the width of a center main groove.

From EP 2 732 983 A1, JP 2011-225084 A, and JP 2000-142030 A, pneumatic tires are known which have a tread portion with a profile that is curved convexly outward in the tire radial direction, the profile respectively consisting of several portions with different radii of curvature.

Meanwhile, a tire having a tread portion having a designated mounting direction to a vehicle has a problem that wear resistance in the vicinity of a tread surface of a land portion located on the outermost side of a vehicle when the tire is mounted on the vehicle is low. In addition, further improvement of steering stability is demanded.

The present invention has been made in view of the above circumstances, and a main object of the present invention is to allow a tire having a tread portion having a designated mounting direction to a vehicle, to exhibit excellent wear resistance and steering stability.

SUMMARY OF THE INVENTION

The present invention is directed to a tire including a tread portion having a designated mounting direction to a vehicle, wherein: the tread portion includes an outer tread edge located on an outer side of the vehicle when the tire is mounted on the vehicle, an outer shoulder main groove provided between the outer tread edge and a tire equator, an outer shoulder land portion demarcated between the outer tread edge and the outer shoulder main groove, the outer shoulder land portion having a plurality of outer shoulder lateral grooves which extend from the outer tread edge and terminate within the outer shoulder land portion, and an outer middle land portion adjacent to a tire equator side of the outer shoulder main groove; and in a meridian cross-section including a tire rotation axis in a normal state where the tire is mounted on a normal rim and inflated to a normal internal pressure, the tread portion has a profile which is curved convexly outward in a tire radial direction, a tread surface of the outer middle land portion includes a first profile extending from a groove edge of the outer shoulder main groove at least to a center in a tire axial direction of the tread surface of the outer middle land portion and composed of a circular arc having a first radius of curvature R1, and a tread surface of the outer shoulder land portion includes a second profile composed of a circular arc having a second radius of curvature R2, and a third profile extending from an inner end in the tire axial direction of the second profile to a groove edge of the outer shoulder main groove and composed of a circular arc having a third radius of curvature R3 smaller than the second radius of curvature R2. An inner end in the tire axial direction of each of the outer shoulder lateral grooves is located inward in the tire axial direction of a point of intersection of the second profile and the third profile.

In the tire according to the present invention, the first profile and the second profile preferably extend on a single circular arc.

In the tire according to the present invention, a maximum distance in the tire radial direction between the single circular arc and the third profile is preferably not greater than 0.5 mm.

In the tire according to the present invention, a distance in the tire axial direction from the inner end of each of the outer shoulder lateral grooves to the point of intersection is preferably not greater than 3.0 mm.

In the tire according to the present invention, each of the outer shoulder lateral grooves preferably includes a groove wall main body extending outward in the tire radial direction from a groove bottom portion thereof, and a chamfered portion which is connected to the groove wall main body and tilted at a larger angle relative to the tire radial direction than the groove wall main body.

In the tire according to the present invention, preferably, the tread portion includes an inner tread edge located on an inner side of the vehicle when the tire is mounted on the vehicle, an inner shoulder main groove provided between the inner tread edge and the tire equator, an inner shoulder land portion demarcated between the inner tread edge and the inner shoulder main groove, and an inner middle land portion adjacent to a tire equator side of the inner shoulder main groove, and, in the meridian cross-section including the tire rotation axis, a tread surface of the inner middle land portion includes a fourth profile extending from a groove edge of the inner shoulder main groove at least to a center in the tire axial direction of the tread surface of the inner middle land portion and composed of a circular arc having a fourth radius of curvature R4, and a tread surface of the inner shoulder land portion includes a fifth profile composed of a circular arc having a fifth radius of curvature R5, and a sixth profile extending from an inner end in the tire axial direction of the fifth profile to a groove edge of the inner shoulder main groove and composed of a circular arc having a sixth radius of curvature R6 smaller than the fifth radius of curvature R5.

In the tire according to the present invention, preferably, the inner shoulder land portion has a plurality of inner shoulder lateral grooves extending from the inner tread edge to the inner shoulder main groove, and each of the inner shoulder lateral grooves includes a tie bar raised at a groove bottom in an inner end portion thereof in the tire axial direction.

In the tire according to the present invention, an outer end in the tire axial direction of the tie bar is preferably located outward in the tire axial direction of a point of intersection of the fifth profile and the sixth profile.

The inventors have focused on the profiles of the tread surfaces of an outer shoulder land portion and an outer middle land portion in a tire having a tread portion having a designated mounting direction to a vehicle. As a result, the inventors have found that, when the tire is mounted on a rim and inflated to a certain internal pressure, a part of the profile of the outer shoulder land portion tends to slightly protrude outward in the tire radial direction from an extension line of the profile of the outer middle land portion. In addition, the inventors have found that, due to the tendency, a large contact pressure acts in the vicinity of the protruding portion of the tread surface of the outer shoulder land portion, resulting in deterioration of wear resistance and steering stability. The inventors have obtained such findings and completed the present invention.

The tread surface of the outer shoulder land portion of the tire according to the present invention includes a second profile composed of a circular arc having a second radius of curvature R2, and a third profile extending from an inner end in the tire axial direction of the second profile to a groove edge of the outer shoulder main groove and composed of a circular arc having a third radius of curvature R3 smaller than the second radius of curvature R2. In such an outer shoulder land portion, a large contact pressure does not act on the third profile, and the outer shoulder land portion exhibits excellent wear resistance. In addition, in the tire according to the present invention, owing to the above-described configuration, a contact pressure uniformly acts on the entireties of the tread surfaces of the outer shoulder land portion and the outer middle land portion, and thus the tire can also exhibit excellent steering stability.

BRIEF DESCRIPTION OF THE DRAWINGS

  FIG. 1 is a development of a tread portion of a tire according to an embodiment of the present invention;
  FIG. 2 is a cross-sectional view taken along a line A-A in FIG. 1;
  FIG. 3 is an enlarged view of an outer shoulder land portion and an outer middle land portion in FIG. 1;
  FIG. 4 is a cross-sectional view taken along a line B-B in FIG. 3;
  FIG. 5 is a cross-sectional view taken along a line C-C in FIG. 3;
  FIG. 6 is an enlarged view of an inner shoulder land portion and an inner middle land portion in FIG. 1;
  FIG. 7 is a cross-sectional view taken along a line D-D in FIG. 6; and
  FIG. 8 is a transverse cross-sectional view of an outer shoulder land portion and an inner middle land portion in a comparative example.

DESCRIPTION OF THE PREFERRED EMBODIMENTS

Hereinafter, an embodiment of the present invention will be described with reference to the drawings.

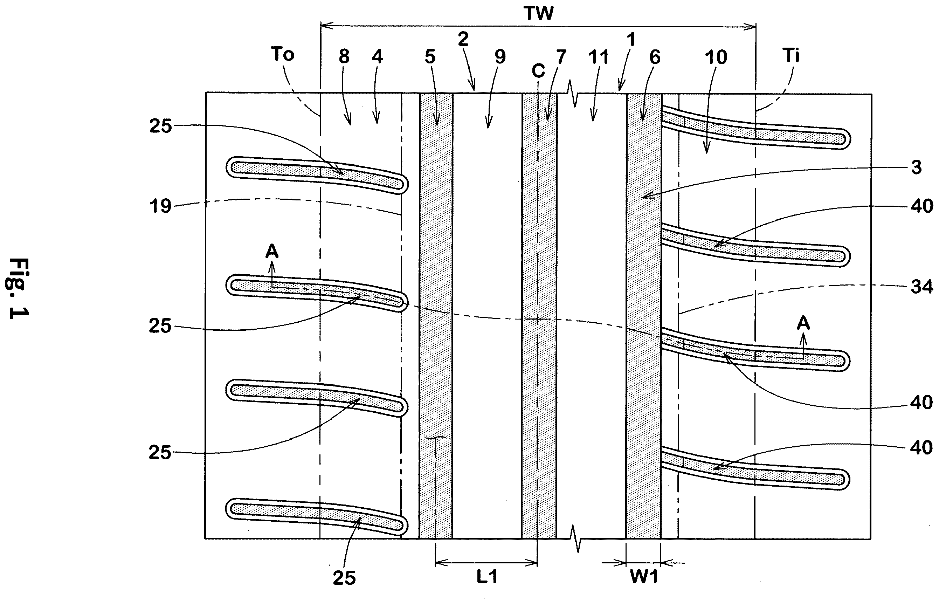

FIG. 1 is a development of a tread portion 2 of a tire 1 showing the embodiment of the present invention. The tire 1 according to the present embodiment is suitably used, for example, as a pneumatic tire for a passenger car. However, the present invention is not limited to such a mode.

As shown in FIG. 1, the tire 1 according to the present invention has the tread portion 2 having a designated mounting direction to a vehicle. The tread portion 2 has an outer tread edge To located at the outer side of a vehicle when the tire 1 is mounted on the vehicle, and an inner tread edge Ti located at the inner side of the vehicle when the tire 1 is mounted on the vehicle. The mounting direction to a vehicle is indicated, for example, on a sidewall portion (not shown) by characters or a symbol.

In the case of a pneumatic tire, each of the outer tread edge To and the inner tread edge Ti is a ground contact position at the outermost side in the tire axial direction when a normal load is applied to the tire 1 in a normal state and the tire 1 is brought into contact with a flat surface at a camber angle of 0°. The normal state is a state where the tire is mounted to a normal rim and inflated to a normal internal pressure and no load is applied to the tire. In the present description, unless otherwise specified, dimensions and the like of components of the tire are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

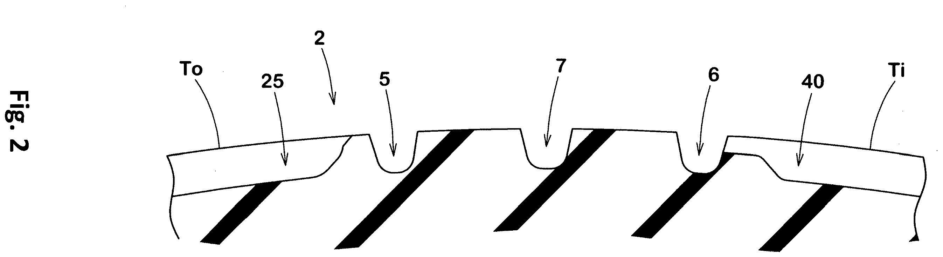

FIG. 2 shows a transverse cross-sectional view of the tread portion 2 in the normal state. FIG. 2 shows a meridian cross-section, of the tire 1, including a tire rotation axis, and corresponds to a cross-sectional view taken along a line A-A in FIG. 1. As shown in FIG. 2, the tread portion 2 has a profile which is curved convexly outward in the tire radial direction.

As shown in FIG. 1, the tread portion 2 of the present embodiment has a plurality of main grooves 3 continuously extending in the tire circumferential direction. For easy understanding, the main grooves 3 are colored in each drawing of the present application. Each main groove 3 of the present embodiment extends in a straight manner so as to be parallel to the tire circumferential direction. The main groove 3 has a groove width not less than at least 3 mm. Therefore, in the present embodiment, the main groove 3 is distinguished from a longitudinal narrow groove that extends with a groove width less than 3 mm. The groove width W1 of the main groove 3 is, for example, preferably 8 to 12 mm. A tread width TW is the distance in the tire axial direction from the outer tread edge To to the inner tread edge Ti in the normal state. The depth of the main groove 3 is, for example, preferably 5 to 10 mm.

In the present embodiment, the tread portion 2 has three main grooves 3. Accordingly, the tread portion 2 is divided into four land portions 4. However, the present invention is not limited to such a mode, and the tread portion 2 may include, for example, five land portions 4 demarcated by four main grooves 3.

The main grooves 3 include an outer shoulder main groove 5, an inner shoulder main groove 6, and a crown main groove 7. The outer shoulder main groove 5 is provided between the outer tread edge To and a tire equator C. Among the three main grooves 3, the outer shoulder main groove 5 is provided on the endmost outer tread edge To side.

The inner shoulder main groove 6 is provided between the inner tread edge Ti and the tire equator C. Among the three main grooves 3, the inner shoulder main groove 6 is provided on the endmost inner tread edge Ti side. The crown main groove 7 is provided between the outer shoulder main groove 5 and the inner shoulder main groove 6. The crown main groove 7 of the present embodiment is provided, for example, on the tire equator C.

The distance L1 in the tire axial direction from the tire equator C to the groove center line of the outer shoulder main groove 5 or the inner shoulder main groove 6 is, for example, preferably 0.20 to 0.30 times the tread width TW.

The tread portion 2 includes an outer shoulder land portion 8 and an outer middle land portion 9. The outer shoulder land portion 8 is demarcated between the outer tread edge To and the outer shoulder main groove 5. The outer middle land portion 9 is adjacent to the tire equator C side of the outer shoulder main groove 5, and is demarcated between the outer shoulder main groove 5 and the crown main groove 7 in the present embodiment.

The tread portion 2 of the present embodiment includes an inner shoulder land portion 10 and an inner middle land portion 11. The inner shoulder land portion 10 is demarcated between the inner tread edge Ti and the inner shoulder main groove 6. The inner middle land portion 11 is demarcated between the inner shoulder main groove 6 and the crown main groove 7.

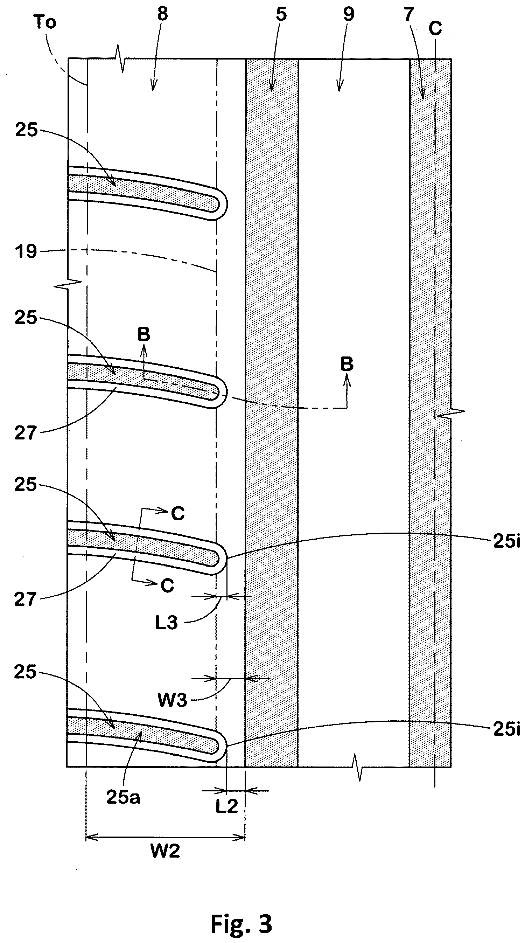

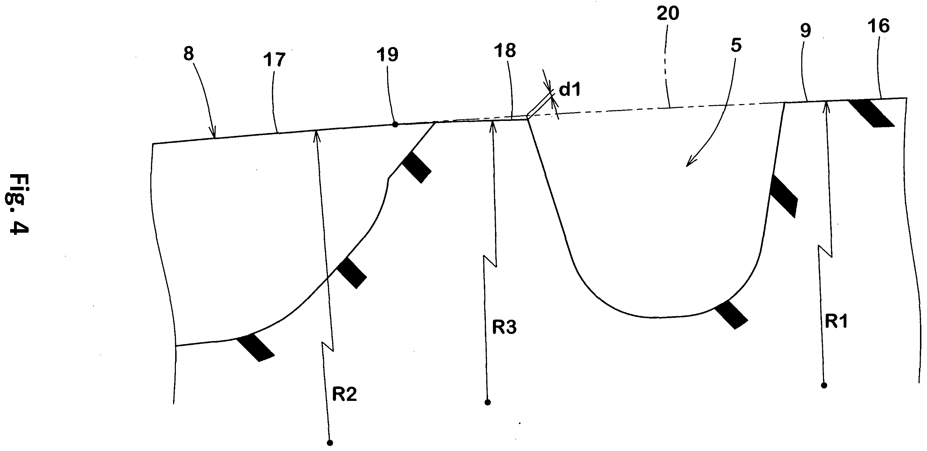

FIG. 3 shows an enlarged view of the outer shoulder land portion 8 and the outer middle land portion 9. FIG. 4 shows a cross-sectional view taken along a line B-B in FIG. 3. FIG. 4 corresponds to a meridian cross-section including the tire rotation axis. As shown in FIG. 4, the tread surface of the outer middle land portion 9 includes a first profile 16 extending from a groove edge of the outer shoulder main groove 5 at least to the center in the tire axial direction of the tread surface of the outer middle land portion 9 and composed of a circular arc having a radius of curvature R1.

The tread surface of the outer shoulder land portion 8 includes a second profile 17 composed of a circular arc having a radius of curvature R2, and a third profile 18 extending from the inner end in the tire axial direction of the second profile 17 to a groove edge of the outer shoulder main groove 5 and composed of a circular arc having a radius of curvature R3 smaller than the radius of curvature R2.

In the tire according to the present invention having the above-described profiles, no local contact pressure acts on the third profile 18 of the outer shoulder land portion 8 during running, and a contact pressure uniformly acts on the entireties of the second profile 17 and the first profile 16. Accordingly, wear resistance and steering stability are improved.

The first profile 16, for example, preferably extends from the groove edge of the outer shoulder main groove 5 to a groove edge of the crown main groove 7. The radius of curvature R1 is, for example, preferably 90 to 350 mm.

The second profile 17, for example, preferably extends from the outer tread edge To to a point of intersection 19 with the third profile 18. The radius of curvature R2 is, for example, preferably 90 to 350 mm.

In the present embodiment, the radius of curvature R1 of the first profile 16 and the radius of curvature R2 of the second profile 17 are equal to each other. In a further preferable mode, the second profile 17 and the first profile 16 extend on a single circular arc 20. Accordingly, a contact pressure uniformly acts on the outer shoulder land portion 8 and the outer middle land portion 9, and thus wear resistance and steering stability are improved.

The radius of curvature R3 of the third profile 18 is, for example, preferably 50 to 160 mm. In addition, the radius of curvature R3 is preferably 0.2 to 0.5 times the radius of curvature R2. Owing to such a third profile 18, a contact pressure uniformly acts on the entirety of the outer shoulder land portion 8.

As shown in FIG. 3, the width W3 in the tire axial direction of the tread surface composed of the third profile 18 is preferably 0.10 to 0.25 times the width W2 in the tire axial direction of the outer shoulder land portion 8. The width W3 corresponds to the distance in the tire axial direction from the point of intersection 19 (indicated by an alternate long and two short dashes line in FIG. 3) of the second profile 17 and the third profile 18 to the outer shoulder main groove 5.

As shown in FIG. 4, from the same viewpoint, the maximum distance d1 in the tire radial direction between the single circular arc 20 and the third profile 18 is not greater than 0.5 mm. Such a third profile 18 causes a contact pressure acting on the outer shoulder land portion 8 to be further uniform, and further improves wear resistance and steering stability.

As shown in FIG. 3, the outer shoulder land portion 8 of the present embodiment has a plurality of outer shoulder lateral grooves 25 which extend from the outer tread edge To and terminate within the outer shoulder land portion 8. Such outer shoulder lateral grooves 25 serve to enhance wet performance while maintaining the stiffness of the outer shoulder land portion 8.

Each outer shoulder lateral groove 25 is, for example, preferably tilted in one direction relative to the tire axial direction (downward toward the right side in FIG. 3). Each outer shoulder lateral groove 25 includes, for example, a curved portion 25a which is curved with a radius of curvature of 100 to 150 mm, between the outer shoulder main groove 5 and the outer tread edge To. The curved portion 25a is, for example, tilted at an angle of 10 to 15° relative to the tire axial direction. Each outer shoulder lateral groove 25 of the present embodiment extends in a straight manner at an angle of 0 to 10° relative to the tire axial direction, on the outer side in the tire axial direction with respect to the outer tread edge To (shown in FIG. 1). However, the outer shoulder lateral grooves 25 are not limited to such a mode.

The maximum depth of each outer shoulder lateral groove 25 is preferably 0.80 to 1.00 times the depth of the outer shoulder main groove 5. In a more preferable mode, the depth of each outer shoulder lateral groove 25 preferably gradually decreases from the outer tread edge To toward the outer shoulder main groove 5 side.

In order to enhance steering stability on a dry road surface and wet performance in a well-balanced manner, the distance L2 in the tire axial direction from an inner end 25i of the outer shoulder lateral groove 25 to the outer shoulder main groove 5 is, for example, preferably 2.5% to 5.0% of the tread width TW (shown in FIG. 1).

The inner end 25i in the tire axial direction of the outer shoulder lateral groove 25 is located inward in the tire axial direction of the point of intersection 19 of the second profile 17 and the third profile 18. The distance L3 in the tire axial direction from the inner end 25i of the outer shoulder lateral groove 25 to the point of intersection 19 is preferably not greater than 7.5 mm. Accordingly, the wear resistance of the outer shoulder land portion 8 is further improved.

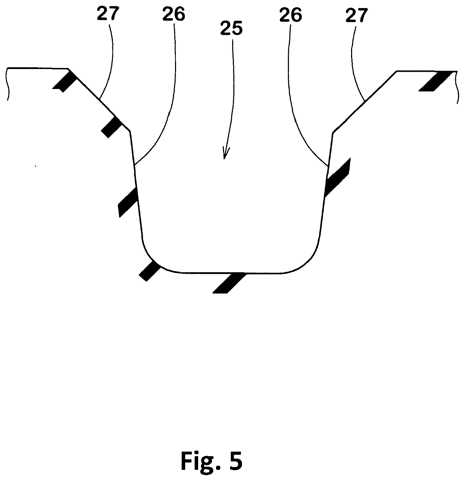

FIG. 5 shows a cross-sectional view of the outer shoulder lateral groove 25 in FIG. 3, taken along a line C-C. As shown in FIG. 5, the outer shoulder lateral groove 25 preferably includes a groove wall main body 26 extending outward in the tire radial direction from a groove bottom portion thereof, and a chamfered portion 27 which is connected to the groove wall main body 26 and tilted at a larger angle relative to the tire radial direction than the groove wall main body 26. The width and the depth of the chamfered portion 27 are, for example, preferably 1.0 to 2.0 mm. Such a chamfered portion 27 comes into contact with the ground when a contact pressure acting on the outer shoulder land portion 8 is large, and serves to improve the wear resistance and the steering stability of the outer shoulder land portion 8.

As shown in FIG. 3, in order to sufficiently exhibit the above-described effects, the above chamfered portion 27 is, for example, preferably provided at the entire periphery of the outer shoulder lateral groove 25. For easy understanding, the region of each outer shoulder lateral groove 25 other than the chamfered portion 27 is colored in each drawing of the present application.

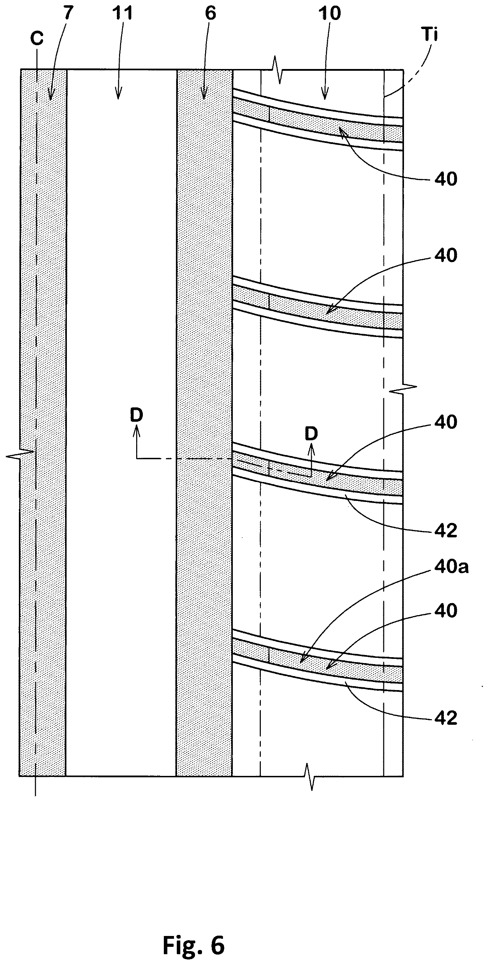

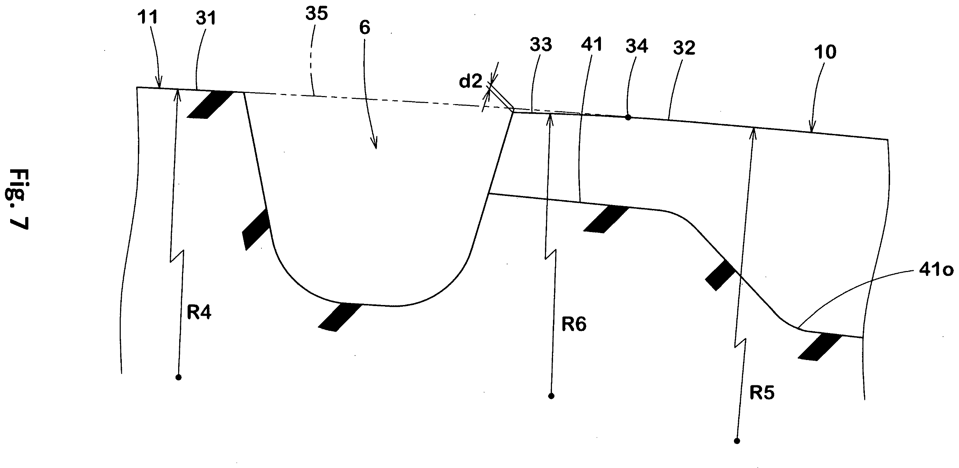

FIG. 6 shows an enlarged view of the inner shoulder land portion 10 and the inner middle land portion 11. FIG. 7 shows a cross-sectional view taken along a line D-D in FIG. 6. FIG. 7 corresponds to a meridian cross-section including the tire rotation axis. As shown in FIG. 7, the tread surface of the inner middle land portion 11 includes a fourth profile 31 extending from a groove edge of the inner shoulder main groove 6 at least to the center in the tire axial direction of the tread surface of the inner middle land portion 11 and composed of a circular arc having a radius of curvature R4. In the present embodiment, the radius of curvature R4 is equal to the radius of curvature R1.

The tread surface of the inner shoulder land portion 10 includes a fifth profile 32 composed of a circular arc having a radius of curvature R5, and a sixth profile 33 extending from the inner end in the tire axial direction of the fifth profile 32 to a groove edge of the inner shoulder main groove 6 and composed of a circular arc having a radius of curvature R6 smaller than the radius of curvature R5. In the present embodiment, the radius of curvature R5 is equal to the radius of curvature R2, and the radius of curvature R6 is equal to the radius of curvature R3 .

Similar to the outer shoulder land portion 8 and the outer middle land portion 9, such an inner shoulder land portion 10 and such an inner middle land portion 11 can improve wear resistance and steering stability.

The configuration of the profiles of the outer shoulder land portion 8 and the outer middle land portion 9 can be applied to the inner shoulder land portion 10 and the inner middle land portion 11. Therefore, the maximum distance d2 in the tire radial direction between a single circular arc 35 and the sixth profile 33 is preferably not greater than 0.5 mm. Such a sixth profile 33 causes a contact pressure acting on the inner shoulder land portion 10 to be further uniform, and further improves wear resistance and steering stability.

As shown in FIG. 6, in order to enhance wet performance, the inner shoulder land portion 10 of the present embodiment has a plurality of inner shoulder lateral grooves 40 extending from the inner tread edge Ti to the inner shoulder main groove 6.

Each inner shoulder lateral groove 40 is, for example, preferably tilted relative to the tire axial direction in the same direction as that of each outer shoulder lateral groove 25. Each inner shoulder lateral groove 40 includes, for example, a curved portion 40a which is curved with a radius of curvature of 100 to 150 mm, between the inner shoulder main groove 6 and the inner tread edge Ti. The curved portion 40a is, for example, tilted at an angle of 10 to 15° relative to the tire axial direction. Each inner shoulder lateral groove 40 of the present embodiment extends in a straight manner at an angle of 0 to 10° relative to the tire axial direction, on the outer side in the tire axial direction with respect to the inner tread edge Ti (shown in FIG. 1). However, the inner shoulder lateral grooves 40 are not limited to such a mode.

Similar to each outer shoulder lateral groove 25, each inner shoulder lateral groove 40 preferably includes a groove wall main body extending outward in the tire radial direction from a groove bottom portion thereof, and a chamfered portion 42 which is connected to the groove wall main body and tilted at a larger angle relative to the tire radial direction than the groove wall main body. The dimension of the chamfered portion 27 of each outer shoulder lateral groove 25 described above can be applied to each of the dimensions of the chamfered portions 42 of the inner shoulder lateral grooves 40. In addition, the region of each inner shoulder lateral groove 40 other than the chamfered portion 42 is colored in each drawing of the present application.

As shown in FIG. 1, in the present embodiment, a region onto which each inner shoulder lateral groove 40 is projected parallel to the tire axial direction preferably does not overlap any outer shoulder lateral groove 25. Such arrangement of the inner shoulder lateral grooves 40 serves to enhance the wear resistance of the entirety of the tread portion 2.

As shown in FIG. 7, each inner shoulder lateral groove 40 preferably includes a tie bar 41 raised at a groove bottom in an inner end portion thereof in the tire axial direction. The depth of the tie bar 41 is, for example, 0.50 to 0.60 times the depth of the inner shoulder main groove 6. Such an inner shoulder lateral groove 40 serves to enhance wet performance and steering stability in a well-balanced manner.

An outer end 41o in the tire axial direction of the tie bar 41 is preferably located outward in the tire axial direction of a point of intersection 34 of the fifth profile 32 and the sixth profile 33. Such a tie bar 41 can further enhance the wear resistance of the inner shoulder land portion 10.

As shown in FIG. 1, each of the outer middle land portion 9 and the inner middle land portion 11 of the present embodiment is preferably a flat land portion having no groove and no sipe (which means a slit having a width not greater than 1.5 mm). Such an outer middle land portion 9 and such an inner middle land portion 11 have high stiffness and can exhibit excellent steering stability. In another embodiment of the present invention, each of the outer middle land portion 9 and the inner middle land portion 11 may have a plurality of sipes. In such a mode, excellent steering stability can be exhibited, and wet performance can also be ensured.

Although the tire according to the embodiment of the present invention has been described in detail above, the present invention is not limited to the above specific embodiment, and various modifications within the scope of the appended claims can be made to implement the present invention.

EXAMPLES

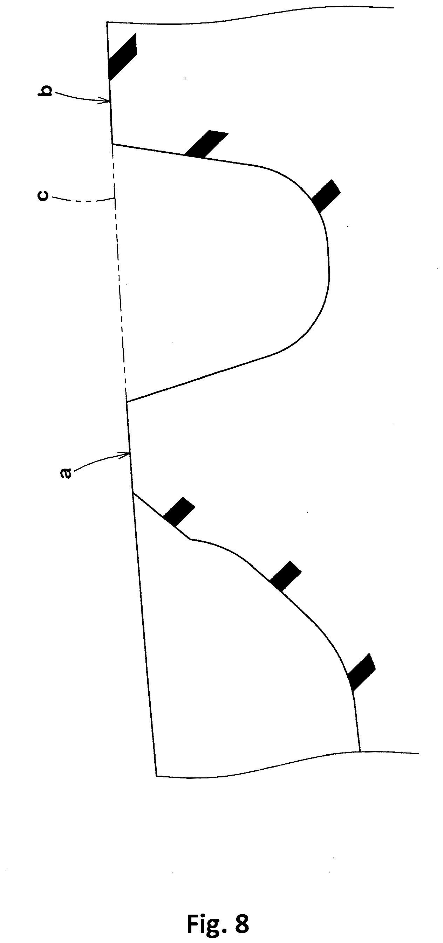

Tires with a size of 195/65R15 having the basic pattern in FIG. 1 were produced as test tires on the basis of specifications in Table 1. As a comparative example, a tire, in which the profiles of the tread surfaces of an outer shoulder land portion a and an inner middle land portion b are composed of a single circular arc c as shown in FIG. 8, was produced as a test tire. The respective test tires were tested for wear resistance and steering stability. The common specifications and the test methods for the respective test tires are as follows.

Mount rim: 15×6.0J

Tire internal pressure: 230 kPa
Test vehicle: a front-wheel-drive car having an engine displacement of 1600 cc
Tire mounted position: all wheels
The test methods are as follows.

<Wear Resistance>

The remaining amount of the outer shoulder land portion was measured after the test vehicle travelled 10,000 km in a city. The results are indicated as indexes with the remaining amount of the comparative example being regarded as 100. A higher value indicates that the wear resistance is better.

<Steering Stability>

Sensory evaluation was made by a driver for steering stability when the driver drove the above test vehicle on a dry road surface. The results are indicated as scores with the score of the comparative example being regarded as 100. A higher value indicates that the steering stability is better.

The results of the tests are shown in Table 1.

[Table 1]

| | Comparative Example | Example 1 | Example 2 | Example 3 | Example 4 | Example 5 | Example 6 | Example 7 |
|---|---|---|---|---|---|---|---|---|
| Drawing showing profiles | FIG. 8 | FIG. 4 | FIG. 4 | FIG. 4 | FIG. 4 | FIG. 4 | FIG. 4 | FIG. 4 |
| Width W3 of tread surface composed of third profile /width W2 of outer shoulder land portion | - | 0.18 | 0.10 | 0.15 | 0.20 | 0.25 | 0.18 | 0.18 |
| Distance d1 (mm) between single circular arc and third profile | - | 0.5 | 0.5 | 0.5 | 0.5 | 0.5 | 0.3 | 0.7 |
| Wear resistance (index) | 100 | 115 | 111 | 113 | 115 | 115 | 111 | 112 |
| Steering stability (score) | 100 | 110 | 107 | 108 | 110 | 108 | 109 | 107 |

As a result of the tests, it was confirmed that of each Example exhibits excellent wear resistance and steering stability.

**Claims**

1. A tire (1) comprising a tread portion (2) having a designated mounting direction to a vehicle, wherein

    the tread portion (2) includes an outer tread edge (To) located on an outer side of the vehicle when the tire (1) is mounted on the vehicle, an outer shoulder main groove (5) provided between the outer tread edge (To) and a tire equator (C), an outer shoulder land portion (8) demarcated between the outer tread edge (To) and the outer shoulder main groove (5), the outer shoulder land portion (8) having a plurality of outer shoulder lateral grooves (25) which extend from the outer tread edge (To) and terminate within the outer shoulder land portion (8), and an outer middle land portion (9) adjacent to a tire equator (C) side of the outer shoulder main groove (5), and
    in a meridian cross-section including a tire rotation axis in a normal state where the tire (1) is mounted on a normal rim and inflated to a normal internal pressure,
    the tread portion (2) has a profile which is curved convexly outward in a tire radial direction,
    a tread surface of the outer middle land portion (9) includes a first profile (16) extending from a groove edge of the outer shoulder main groove (5) at least to a center in a tire axial direction of the tread surface of the outer middle land portion (9) and composed of a circular arc having a first radius of curvature (R1), and
    a tread surface of the outer shoulder land portion (8) includes

      a second profile (17) composed of a circular arc having a second radius of curvature (R2), and
      a third profile (18) extending from an inner end in the tire axial direction of the second profile (17) to a groove edge of the outer shoulder main groove (5) and composed of a circular arc having a third radius of curvature (R3) smaller than the second radius of curvature (R2),

      **characterized in that** an inner end (25i) in the tire axial direction of each of the outer shoulder lateral grooves (25) is located inward in the tire axial direction of a point of intersection (19) of the second profile (17) and the third profile (18).

2. The tire (1) according to claim 1, wherein the first profile (16) and the second profile (17) extend on a single circular arc (20).

3. The tire (1) according to claim 2, wherein a maximum distance (d1) in the tire radial direction between the single circular arc (20) and the third profile (18) is not greater than 0.5 mm.

4. The tire (1) according to any one of claims 1 to 3, wherein a distance (L3) in the tire axial direction from the inner end (25i) of each of the outer shoulder lateral grooves (25) to the point of intersection (19) is not greater than 3.0 mm.

5. The tire (1) according to any one of claims 1 to 4, wherein each of the outer shoulder lateral grooves (25) includes a groove wall main body (26) extending outward in the tire radial direction from a groove bottom portion thereof, and a chamfered portion (27) which is connected to the groove wall main body (26) and tilted at a larger angle relative to the tire radial direction than the groove wall main body (26).

6. The tire (1) according to any one of claims 1 to 5, wherein

    the tread portion (2) includes an inner tread edge (Ti) located on an inner side of the vehicle when the tire (1) is mounted on the vehicle, an inner shoulder main groove (6) provided between the inner tread edge (Ti) and the tire equator (C), an inner shoulder land portion (10) demarcated between the inner tread edge (Ti) and the inner shoulder main groove (6), and an inner middle land portion (11) adjacent to a tire equator (C) side of the inner shoulder main groove (6), and
    in the meridian cross-section including the tire rotation axis,
    a tread surface of the inner middle land portion (11) includes a fourth profile (31) extending from a groove edge of the inner shoulder main groove (6) at least to a center in the tire axial direction of the tread surface of the inner middle land portion (11) and composed of a circular arc having a fourth radius of curvature (R4), and
    a tread surface of the inner shoulder land portion (10) includes

a fifth profile (32) composed of a circular arc having a fifth radius of curvature (R5), and
a sixth profile (33) extending from an inner end in the tire axial direction of the fifth profile (32) to a groove edge of the inner shoulder main groove (6) and composed of a circular arc having a sixth radius of curvature (R6) smaller than the fifth radius of curvature (R5).

**7.** The tire (1) according to claim 6, wherein

the inner shoulder land portion (10) has a plurality of inner shoulder lateral grooves (40) extending from the inner tread edge (Ti) to the inner shoulder main groove (6), and
each of the inner shoulder lateral grooves (40) includes a tie bar (41) raised at a groove bottom in an inner end portion thereof in the tire axial direction.

**8.** The tire (1) according to claim 7, wherein an outer end (41o) in the tire axial direction of the tie bar (41) is located outward in the tire axial direction of a point of intersection (34) of the fifth profile (32) and the sixth profile (33).

## Patentansprüche

**1.** Reifen (1) mit einem Laufflächenabschnitt (2), der eine bestimmte Montagerichtung an einem Fahrzeug aufweist, wobei

der Laufflächenabschnitt (2) eine äußere Laufflächenkante (To), die sich auf einer Außenseite des Fahrzeugs befindet, wenn der Reifen (1) an dem Fahrzeug montiert ist, eine äußere Schulterhauptrille (5), die zwischen der äußeren Laufflächenkante (To) und einem Reifenäquator (C) vorgesehen ist, und einen äußeren Schulterlandabschnitt (8) umfasst, der zwischen der äußeren Laufflächenkante (To) und der äußeren Schulterhauptrille (5) abgegrenzt ist, wobei der äußere Schulterlandabschnitt (8) eine Vielzahl von äußeren Schulterquerrillen (25) aufweist, die sich von der äußeren Laufflächenkante (To) erstrecken und innerhalb des äußeren Schulterlandabschnitts (8) enden, und einen äußeren mittleren Landabschnitt (9) benachbart zu einer Seite des Reifenäquators (C) der äußeren Schulterhauptrille (5), und
in einem Meridianquerschnitt, der eine Reifendrehachse in einem normalen Zustand einschließt, in dem der Reifen (1) auf eine normale Felge aufgezogen und auf einen normalen Innendruck aufgepumpt ist,
der Laufflächenabschnitt (2) ein Profil aufweist, das in einer radialen Richtung des Reifens konvex nach außen gekrümmt ist,
eine Laufflächenoberfläche des äußeren mittleren Landabschnitts (9) ein erstes Profil (16) aufweist, das sich von einer Rillenkante der äußeren Schulterhauptrille (5) mindestens bis zu einer Mitte in einer axialen Richtung des Reifens der Laufflächenoberfläche des äußeren mittleren Landabschnitts (9) erstreckt und aus einem Kreisbogen mit einem ersten Krümmungsradius (R1) besteht, und
eine Lauffläche des äußeren Schulterlandabschnitts (8) umfasst

ein zweites Profil (17), das aus einem Kreisbogen mit einem zweiten Krümmungsradius (R2) besteht, und
ein drittes Profil (18), das sich von einem inneren Ende in der axialen Richtung des Reifens des zweiten Profils (17) zu einer Rillenkante der äußeren Schulterhauptrille (5) erstreckt und aus einem Kreisbogen mit einem dritten Krümmungsradius (R3) besteht, der kleiner ist als der zweite Krümmungsradius (R2),

**dadurch gekennzeichnet, dass** ein inneres Ende (25i) in der axialen Richtung des Reifens von jeder der äußeren Schulterquerrillen (25) in der axialen Richtung des Reifens innen von einem Schnittpunkt (19) des zweiten Profils (17) und des dritten Profils (18) angeordnet ist.

**2.** Reifen (1) nach Anspruch 1, wobei das erste Profil (16) und das zweite Profil (17) sich auf einem einzigen Kreisbogen (20) erstrecken.

**3.** Reifen (1) nach Anspruch 2, wobei ein maximaler Abstand (d1) in der radialen Richtung des Reifens zwischen dem einzigen Kreisbogen (20) und dem dritten Profil (18) nicht größer als 0,5 mm ist.

**4.** Reifen (1) nach einem der Ansprüche 1 bis 3, wobei ein Abstand (L3) in der axialen Richtung des Reifens von dem inneren Ende (25i) jeder der äußeren Schulterquerrillen (25) zu dem Schnittpunkt (19) nicht größer als 3,0 mm ist.

**5.** Reifen (1) nach einem der Ansprüche 1 bis 4, wobei jede der äußeren Schulterquerrillen (25) einen Rillenwand-Hauptkörper (26), der sich in der radialen Richtung des Reifens von ihrem Rillengrundabschnitt nach außen erstreckt, und einen abgeschrägten Abschnitt (27) aufweist, der mit dem Rillenwand-Hauptkörper (26) verbunden ist und in einem größeren Winkel relativ zu der radialen Richtung des Reifens geneigt ist als der Rillenwand-Hauptkörper (26).

6.  Reifen (1) nach einem der Ansprüche 1 bis 5, wobei

der Laufflächenabschnitt (2) eine innere Laufflächenkante (Ti), die auf einer Innenseite des Fahrzeugs angeordnet ist, wenn der Reifen (1) an dem Fahrzeug montiert ist, eine innere Schulterhauptrille (6), die zwischen der inneren Laufflächenkante (Ti) und dem Reifenäquator (C) vorgesehen ist, einen inneren Schulterlandabschnitt (10), der zwischen der inneren Laufflächenkante (Ti) und der inneren Schulterhauptrille (6) abgegrenzt ist, und einen inneren mittleren Landabschnitt (11) benachbart zu einer Seite des Reifenäquators (C) der inneren Schulterhauptrille (6) umfasst, und
in dem Meridianquerschnitt, der die Reifendrehachse einschließt,
eine Laufflächenoberfläche des inneren mittleren Landabschnitts (11) ein viertes Profil (31) umfasst, das sich von einer Rillenkante der inneren Schulterhauptrille (6) mindestens bis zu einer Mitte in der axialen Richtung des Reifens der Laufflächenoberfläche des inneren mittleren Landabschnitts (11) erstreckt und aus einem Kreisbogen mit einem vierten Krümmungsradius (R4) besteht, und
eine Laufflächenoberfläche des inneren Schulterlandabschnitts (10) umfasst

ein fünftes Profil (32), das aus einem Kreisbogen mit einem fünften Krümmungsradius (R5) besteht, und
ein sechstes Profil (33), das sich von einem inneren Ende in der axialen Richtung des Reifens des fünften Profils (32) zu einer Rillenkante der inneren Schulterhauptrille (6) erstreckt und aus einem Kreisbogen mit einem sechsten Krümmungsradius (R6) besteht, der kleiner ist als der fünfte Krümmungsradius (R5).

7.  Reifen (1) nach Anspruch 6, wobei

der innere Schulterlandabschnitt (10) eine Vielzahl von inneren Schulterquerrillen (40) aufweist, die sich von der inneren Laufflächenkante (Ti) zu der inneren Schulterhauptrille (6) erstrecken, und
jede der inneren Schulterquerrillen (40) einen Anbindungssteg (41) umfasst, der in einem inneren Endabschnitt an ihrem Rillengrund in der axialen Richtung des Reifens erhöht ist.

8.  Reifen (1) nach Anspruch 7, wobei ein äußeres Ende (41o) in der axialen Richtung des Reifens des Anbindungsstegs (41) in der axialen Richtung des Reifens außen von einem Schnittpunkt (34) des fünften Profils (32) und des sechsten Profils (33) angeordnet ist.

## Revendications

1.  Pneumatique (1) comprenant une portion formant bande de roulement (2) ayant une direction de montage par conception sur un véhicule, dans lequel la portion formant bande de roulement (2) inclut un bord de bande de roulement extérieur (To) situé sur un côté extérieur du véhicule quand le pneumatique (1) est monté sur le véhicule, une rainure principale d'épaulement extérieure (5) prévue entre le bord de bande de roulement extérieur (To) et un équateur de pneumatique (C), une portion en relief d'épaulement extérieure (8) délimitée entre le bord de bande de roulement extérieur (To) et la rainure principale d'épaulement extérieure (5), la portion en relief d'épaulement extérieure (8) ayant une pluralité de rainures latérales d'épaulement extérieures (25) qui s'étendent depuis le bord de bande de roulement extérieur (To) et se terminent à l'intérieur de la portion en relief d'épaulement extérieure (8), et une portion en relief médiane extérieure (9) adjacente à un côté d'équateur de pneumatique (C) de la rainure principale d'épaulement extérieure (5), et

dans une section transversale méridienne incluant un axe de rotation du pneumatique dans un état normal dans lequel le pneumatique (1) est monté sur une jante normale et est gonflé à une pression interne normale, la portion formant bande de roulement (2) a un profil qui est incurvé de manière convexe vers l'extérieur dans une direction radiale du pneumatique,
une surface de bande de roulement de la portion en relief médiane extérieure (9) inclut un premier profil (16) s'étendant depuis un bord de rainure de la rainure principale d'épaulement extérieure (5) au moins jusqu'à un centre dans une direction axiale du pneumatique de la surface de bande de roulement de la portion en relief médiane extérieure (9) et composé d'un arc circulaire ayant un premier rayon de courbure (R1), et
une surface de bande de roulement de la portion en relief d'épaulement extérieure (8) inclut

un deuxième profil (17) composé d'un arc circulaire ayant un deuxième rayon de courbure (R2), et
un troisième profil (18) s'étendant depuis une extrémité intérieure dans la direction axiale du pneumatique du
deuxième profil (17) jusqu'à un bord de rainure de la rainure principale d'épaulement extérieure (5) et composé
d'un arc circulaire ayant un troisième rayon de courbure (R3) plus petit que le deuxième rayon de courbure (R2),
**caractérisé en ce qu'**une extrémité intérieure (25i) dans la direction axiale du pneumatique de chacune des
rainures latérales d'épaulement extérieures (25) est située à l'intérieur dans la direction axiale du pneumatique
d'un point d'intersection (19) du deuxième profil (17) et du troisième profil (18).

2. Pneumatique (1) selon la revendication 1, dans lequel le premier profil (16) et le deuxième profil (17) s'étendent sur un arc circulaire unique (20).

3. Pneumatique (1) selon la revendication 2, dans lequel une distance maximum (d1) dans la direction radiale du pneumatique entre l'arc circulaire unique (20) et le troisième profil (18) n'est pas supérieure à 0,5 mm.

4. Pneumatique (1) selon l'une quelconque des revendications 1 à 3, dans lequel une distance (L3) dans la direction axiale du pneumatique depuis l'extrémité intérieure (25i) de chacune des rainures latérales d'épaulement extérieures (25) jusqu'au point d'intersection (19) n'est pas supérieure à 3,0 mm.

5. Pneumatique (1) selon l'une quelconque des revendications 1 à 4, dans lequel chacune des rainures latérales d'épaulement extérieures (25) inclut un corps principal formant paroi de rainure (26) s'étendant vers l'extérieur dans la direction radiale du pneumatique depuis une portion de fond de rainure de celui-ci, et une portion chanfreinée (27) qui est connectée au corps principal formant paroi de rainure (26) et inclinée sous un angle plus grand relativement à la direction radiale du pneumatique que le corps principal formant paroi de rainure (26).

6. Pneumatique (1) selon l'une quelconque des revendications 1 à 5, dans lequel

la portion formant bande de roulement (2) inclut un bord de bande de roulement intérieur (Ti) situé sur un côté intérieur du véhicule quand le pneumatique (1) est monté sur le véhicule, une rainure principale d'épaulement intérieure (6) prévue entre le bord de bande de roulement intérieur (Ti) et l'équateur de pneumatique (C), une portion en relief d'épaulement intérieure (10) délimitée entre le bord de bande de roulement intérieur (Ti) et la rainure principale d'épaulement intérieure (6), et une portion en relief médiane intérieure (11) adjacente à un côté d'équateur de pneumatique (C) de la rainure principale d'épaulement intérieure (6), et dans la section transversale méridienne incluant l'axe de rotation du pneumatique,
une surface de bande de roulement de la portion en relief médiane intérieure (11) inclut un quatrième profil (31) s'étendant depuis un bord de rainure de la rainure principale d'épaulement intérieure (6) au moins jusqu'à un centre dans la direction axiale du pneumatique de la surface de bande de roulement de la portion en relief médiane intérieure (11) et composé d'un arc circulaire ayant un quatrième rayon de courbure (R4), et
une surface de bande de roulement de la portion en relief d'épaulement intérieure (10) inclut
un cinquième profil (32) composé d'un arc circulaire ayant un cinquième rayon de courbure (R5), et
un sixième profil (33) s'étendant depuis une extrémité intérieure dans la direction axiale du pneumatique du cinquième profil (32) jusqu'à un bord de rainure de la rainure principale d'épaulement intérieure (6) et composé d'un arc circulaire ayant un sixième rayon de courbure (R6) plus petit que le cinquième rayon de courbure (R5).

7. Pneumatique (1) selon la revendication 6, dans lequel la portion en relief d'épaulement intérieure (10) a une pluralité de rainures latérales d'épaulement intérieures (40) s'étendant depuis le bord de bande de roulement intérieur (Ti) jusqu'à la rainure principale d'épaulement intérieure (6), et
chacune des rainures latérales d'épaulement intérieures (40) inclut une barrette de liaison (41) surélevée au niveau d'un fond de rainure dans une portion d'extrémité intérieure de celui-ci dans la direction axiale du pneumatique.

8. Pneumatique (1) selon la revendication 7, dans lequel une extrémité extérieure (41o) dans la direction axiale du pneumatique de la barrette de liaison (41) est située à l'extérieur dans la direction axiale du pneumatique d'un point d'intersection (34) du cinquième profil (32) et du sixième profil (33).

**Fig. 1**

13

**Fig. 2**

**Fig. 3**

**Fig. 4**

**Fig. 5**

**Fig. 6**

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015140047 A
- EP 2732983 A1
- JP 2011225084 A
- JP 2000142030 A